Europäisches Patentamt

European Patent Office

Office européen des brevets

(19)

(11) Veröffentlichungsnummer : **0 467 174 B1**

## (12) EUROPÄISCHE PATENTSCHRIFT

(45) Veröffentlichungstag der Patentschrift :
29.09.93 Patentblatt 93/39

(51) Int. Cl.⁵ : **B01J 23/42,** B01J 21/18,
C01B 21/14

(21) Anmeldenummer : **91111255.5**

(22) Anmeldetag : **06.07.91**

(54) **Platin-Graphitträger-Katalysatoren und deren Verwendung.**

(30) Priorität : **18.07.90 DE 4022851**

(43) Veröffentlichungstag der Anmeldung :
**22.01.92 Patentblatt 92/04**

(45) Bekanntmachung des Hinweises auf die
Patenterteilung :
**29.09.93 Patentblatt 93/39**

(84) Benannte Vertragsstaaten :
**BE CH DE ES FR GB IT LI NL**

(56) Entgegenhaltungen :
**EP-A- 0 060 317
EP-A- 0 308 719
EP-A- 0 334 121
WO-A-88/04197
GB-A- 2 217 701
US-A- 4 122 040**

(72) Erfinder : **Steigleiter, Werner
Im Waldhof 4
W-6703 Limburgerhof (DE)**
Erfinder : **Hoelderich, Wolfgang, Dr.
Mannheimer Strasse 18c
W-6710 Frankenthal (DE)**
Erfinder : **Weiss, Franz-Josef, Dr.
Schilfweg 1
W-6708 Neuhofen (DE)**
Erfinder : **Fuchs, Hugo, Dr.
Egellstrasse 28
W-6700 Ludwigshafen (DE)**
Erfinder : **Guns, Luc
Apoldaer Weg 26
W-6800 Mannheim 31 (DE)**
Erfinder : **Neubauer, Gerald, Dr.
Mozartstrasse 24
W-6940 Weinheim (DE)**
Erfinder : **Ritz, Josef, Dr.
Osloer Weg 8
W-6700 Ludwigshafen (DE)**

(73) Patentinhaber : **BASF Aktiengesellschaft
Carl-Bosch-Strasse 38
D-67063 Ludwigshafen (DE)**

**Beschreibung**

Für die Hydrierung von organischen und anorganischen Verbindungen eignen sich Edelmetalle wie Palladium, Platin oder Ruthenium, die auf diverse Träger wie Siliciumdioxid, Aluminiumoxid, Graphit, Aktivkohle aufgebracht sind, wie aus "Katalytische Hydrierungen im organisch chemischen Laboratorium", F. Zimalkowski, Ferdinand Enke Verlag, Stuttgart (1965) bekannt ist.

Wesentlich für die Aktivität dieser Katalysatoren ist die hohe Dispersion des Edelmetalls auf dem Katalysatorträger. Wie aus "Structure of Metallic Catalyst", J.R. Anderson, Academic Press (1975), Seiten 164ff bekannt ist, kann es bei diesen Katalysatoren unter Reaktionsbedingungen durch Agglomerieren zur Zunahme der Partikelgröße des aufgebrachten Edelmetalls und Abnahme der Dispersion und zudem zur Ablösung des elementaren Edelmetalls von der Trägermasse kommen.

Aus der DE-PS 956 038 sind bereits Platin-Graphitträger-Katalysatoren bekannt, die durch Fällen von Platin auf suspendierten Graphitträger gegebenenfalls unter Zusatz von vergiftenden Mitteln wie Schwefel-, Selen-, Arsen- oder Tellurverbindungen erhalten werden. Solche Katalysatoren eignen sich zur katalytischen Hydrierung von Stickstoffmonoxid. Diese Katalysatoren haben den Nachteil, daß die Reaktivität und Selektivität bei längerem Gebrauch rasch abnimmt.

Es war deshalb die technische Aufgabe gestellt, Platin-Graphitträger-Katalysatoren zur Verfügung zu stellen, die eine lange Lebensdauer bei hoher Selektivität und hoher Raum-/Zeitausbeute aufweisen und die weniger aktivitätsmindernde Veränderungen erleiden.

Diese Aufgabe wird gelöst durch Platin-Graphitträger-Katalysatoren mit einem Platingehalt von 0,01 bis 5 Gew.-%, dadurch gekennzeichnet, daß der Graphitträger eine scheinbare Dichte von 1,7 bis 2,2 g/ml aufweist.

Ferner ist ein Gegenstand der Erfindung die Verwendung der Platin-Graphitträger-Katalysatoren, bei denen der Graphitträger eine scheinbare Dichte von 1,7 bis 2,2 g/ml aufweist, als Hydrierkatalysatoren.

Die erfindungsgemäßen Platin-Graphitträger-Katalysatoren haben den Vorteil, daß sie sich weniger rasch verändern und hierdurch eine längere Lebensdauer aufweisen und eine hohe Selektivität und hohe Raum/Zeitausbeute bei der Hydrierung ermöglichen. Darüber hinaus haben die neuen Katalysatoren den Vorteil, daß sie weniger oft regeneriert werden müssen und der Verbrauch an Chemikalien und die Verluste an Platin reduziert werden.

Die erfindungsgemäßen Platin-Graphitträger-Katalysatoren haben einen Gehalt an Platin von 0,01 bis 5 Gew.-%. Vorteilhaft beträgt der Platingehalt 0,01 bis 2,5 Gew.-%, insbesondere 0,1 bis 1 Gew.-%, jeweils bezogen auf Graphitträger und Platin. Platin ist im allgemeinen auf die Oberfläche des Graphitträgers aufgebracht und liegt dort im wesentlichen als metallisches Platin vor. Vorteilhaft ist Platin auf der Graphitoberfläche in feiner Verteilung aufgebracht, z.B. durch Fällen von metallischem Platin aus einer Lösung auf den darin suspendierten Graphitträger.

Ein wesentliches Merkmal der Erfindung ist es, daß der Graphitträger eine scheinbare Dichte von 1,7 bis 2,2 g/ml aufweist. Besonders bewährt hat sich Graphit mit einer scheinbaren Dichte von 1,73 bis 1,95, insbesondere 1,75 bis 1,90 g/ml. Als scheinbare Dichte wird der Quotient aus der Masse und dem Volumen einschließlich aller Poren bezeichnet.

Vorzugsweise hat der Graphitträger eine Druckfestigkeit von 50 bis 250 N/mm². Graphitträger mit einer Druckfestigkeit von 50 bis 150, insbesondere 60 bis 120 N/mm² sind besonders bevorzugt.

Ferner hat es sich herausgestellt, daß Graphitträger mit einer Porosität kleiner 20 %, insbesondere zwischen 20 und 10 %, besonders gut geeignet sind. Die Porosität kann nach DIN 51918 bestimmt werden.

Im allgemeinen liegt der Graphitträger in suspendierbarer Form vor. Hierbei hat sich eine Korngröße des Graphitträgers von 1 bis 600 μm besonders bewährt. Im allgemeinen verwendet man Graphitträger mit einem möglichst geringen Aschegehalt, z.B. 0,001 bis 1 Gew.-%, insbesondere 0,01 bis 0,2 Gew.-%. Geeignet ist z.B. Elektrographit. Die genannten Kennwerte können leicht ermittelt und eine geeignete Auswahl getroffen werden.

Der erfindungsgemäße Katalysator wird in der Regel durch Fällen von Platin aus Platinsalzlösungen auf den in der Lösung suspendierten Graphitträger hergestellt.

Der erfindungsgemäße Katalysator kann entweder ohne weitere Zusätze für Hydrierungen verwendet werden oder für spezielle Hydrierzwecke, z.B. durch den Zusatz von vergiftenden Mitteln wie Schwefel-, Selen-, Tellur- oder Arsenverbindungen partiell vergiftet werden. Partiell vergiftete Platin-Graphitträger-Katalysatoren mit einem Schwefel- und/oder Selengehalt von 3 bis 15 Atomprozent bezogen auf Platin haben sich besonders bewährt. Als selektive Vergiftungsmittel bei der Herstellung des erfindungsgemäßen Katalysators eignen sich besonders Natriumdithionit, Alkalithiosulfat, Alkalipolythiosulfate, Thioharnstoff, Schwefelwasserstoff, Alkalisulfid, Alkalipoysulfide und deren Kombinationen, Tellursäure oder Arsensäure.

Erfindungsgemäße Katalysatoren erhält man beispielsweise durch Fällen von metallischem Platin aus wäßrigen Platinlösungen auf darin suspendierten Graphitträgern. In der Regel geht man hierbei von wäßrigen Lösungen von Hexachloroplatinsäure oder Tetrachloroplatinsäure oder deren Salze aus. Mittel zum partiellen Vergiften des Katalysators setzt man vorteilhaft nach Abpuffern der Lösung mit Alkaliacetat zu. Anschließend wird metallisches Platin auf den Graphitträger mittels Reduktionsmitteln, die Platin zu metallischem Platin reduzieren, ausgefällt. Geeignete Reduktionsmittel sind beispielsweise Hydrazin, Formaldehyd oder Ameisensäure. Die Verwendung von Ameisensäure hat sich besonders bewährt. Vorteilhaft wendet man je Gramm Atom Platin 100 bis 1000 mol Reduktionsmittel an. Vorteilhaft hält man bei der Reduktion zu metallischem Platin eine Temperatur von 60 bis 90°C ein. Nach beendeter Reduktion wird der suspendierte Katalysator abfiltriert und zweckmäßig mit Wasser ausgewaschen.

Der erfindungsgemäße Katalysator eignet sich zur Hydrierung von organischen und anorganischen Verbindungen. Vorteilhaft wird der Katalysator für die Hydrierung von olefinisch oder acetylenisch ungesättigten Verbindungen, weiterhin zur Hydrierung von Carbonsäuren, Aldehyden oder Ketonen zu den entsprechenden Alkoholen oder Nitrilen zu den entsprechenden Aminen verwendet. Ferner eignen sich die erfindungsgemäßen Katalysatoren zur Hydrierung von anorganischen Stoffen wie Sauerstoff, insbesondere jedoch zur Herstellung von Hydroxylammoniumsalzen durch Hydrieren von Stickstoffmonoxid in wäßrigen Mineralsäuren.

Bei der Herstellung von Hydroxylammoniumsalzen hält man in der Regel ein Molverhältnis von Wasserstoff zu Stickstoffmonoxid von 1,5:1 bis 6:1 ein. Besonders gute Ergebnisse erhält man, wenn man darauf achtet, daß in der Reaktionszone ein Molverhältnis von Wasserstoff zu Stickstoffmonoxid von 3,5 bis 5:1 aufrecht erhalten wird.

Vorteilhaft verwendet man als Säuren starke Mineralsäuren wie Salpetersäure, Schwefelsäure oder Phosphorsäure. Geeignet sind auch saure Salze wie Ammoniumbisulfat. In der Regel geht man von 4 bis 6 normalen wäßrigen Säuren aus und läßt im Verlauf der Reaktion die Säurekonzentration nicht unter 0,2 normal fallen.

Die Umsetzung führt man vorteilhaft bei einer Temperatur von 30 bis 80°C durch. Besonders bewährt haben sich Temperaturen von 35 bis 60°C. In der Regel führt man die Umsetzung bei Atmosphärendruck oder erhöhtem Druck, z.B. bis zu 30 bar durch. Besonders bewährt hat sich die erfindungsgemäße Arbeitsweise, wenn man die Umsetzung unter erhöhtem Druck, z.B. von 1,5 bis 20 bar, durchführt.

Die hierbei verwendeten Platin-Graphitträger-Katalysatoren haben vorteilhaft einen Gehalt von 0,1 bis 5 Gew.-%, insbesondere 0,2 bis 1 Gew.-% Platin. In der Regel wendet man je Liter verdünnter Mineralsäure von 25 bis 100 g, insbesondere von 30 bis 80 g Platin-Graphitträger-Katalysator an.

Die Erfindung sei an folgenden Beispielen veranschaulicht.

Beispiel 1

a) Herstellung des Katalysators

Es wird Graphit mit folgenden Kennzahlen verwendet:
Aschegehalt 0,12 Gew.-%, Korngröße 50 bis 71 µm, scheinbare Dichte 1,87 g/cm³, Druckfestigkeit des Ausgangsmaterials 71 N/mm², Porosität 11 %.

50 g dieses Graphits und 0,6637 g Hexachloroplatin-IV-Säure-6-hydrat werden mit 68,4 ml einer wäßrigen Lösung die 4,84 ml konzentrierte Salzsäure und 1,02 ml konzentrierte Salpetersäure enthält, über Nacht bei 80°C gerührt. Die erhaltene Suspension wird mit Natriumcarbonat bis zu einem pH-Wert 2,75 neutralisiert. Anschließend werden 2,5 g Natriumacetat und danach 26,72 mg Thioharnstoff zugegeben. Daraufhin versetzt man die Suspension mit 6,25 ml konz. Ameisensäure und rührt so lange bei 80°C bis die Lösung frei von Platin ist. Hierbei wird metallisches Platin auf den Graphitträgern niedergeschlagen. Der Katalysator wird dann durch Filtration abgetrennt und mit destilliertem Wasser neutral gewaschen. Der Katalysator enthält 0,5 Gew.-% Platin in der Trockenmasse.

b) Hydroxylaminsynthese

4,8 g des Katalysators werden in 120 ml 4,3 n-Schwefelsäure suspendiert und bei 40°C unter kräftigem Rühren (3500 Upm) stündlich 7,75 N-Liter eines Gemisches aus 35 Vol.-% Stickstoffmonoxid und 65 Vol.-% Wasserstoff eingeleitet. Nach 4 Stunden wird die Reaktion unterbrochen und der Katalysator durch Filtration abgetrennt. Die Flüssigphase wird analysiert. Nach Zugabe von 120 ml 4,3 n $H_2SO_4$ wird die Reaktion mit dem Katalysator erneut 4 Stunden durchgeführt und danach die Flüssigkeit wieder durch frische Schwefelsäure ersetzt. Dieser Vorgang wird laufend wiederholt (Zyklen) und der Versuch wird erst abgebrochen, wenn der Katalysator nur noch eine ungenügende Hydroxylaminselektivität hat, was durch das Ansteigen der $N_2O$-Menge im Abgas zu erkennen ist. Die erzielten Ergebnisse sind aus der Tabelle ersichtlich.

Beispiel 2

Man verfährt wie in Beispiel 1 beschrieben, verwendet jedoch für die Herstellung des Katalysators Graphit mit folgenden Kennzahlen: Korngröße 50 bis 71 μm, scheinbare Dichte 1,76 g/ml, Druckfestigkeit des Ausgangsmaterials 60 N/mm², Porosität 14 %, Aschegehalt 0,03 %.

Die Hydroxylaminsynthese wird, wie im Beispiel 1b) beschrieben, durchgeführt. Die erzielten Ergebnisse sind in der Tabelle aufgeführt.

Beispiel 3

Man verfährt wie in Beispiel 1 beschrieben, verwendet jedoch für die Herstellung des Katalysators Graphit mit folgenden Kennzahlen: Korngröße 50 bis 71 μm, scheinbare Dichte 1,87 g/ml, Druckfestigkeit des Ausgangsmaterials 100 N/mm², Porosität 12,5 %, Aschegehalt 0,05 %. Die Hydroxylaminsynthese wird, wie in Beispiel 1b) beschrieben, durchgeführt. Die erzielten Ergebnisse sind aus der Tabelle zu entnehmen.

Beispiel 4

Man verfährt wie in Beispiel 1 beschrieben, verwendet jedoch für die Herstellung des Katalysators Graphit mit folgenden Kennzahlen: Korngröße 50 bis 71 μm, scheinbare Dichte 1,81 g/ml, Druckfestigkeit des Ausgangsmaterials 90 N/mm² und Porosität 11 %, Aschegehalt 0,03 %. Die Hydroxylaminsynthese wird, wie in Beispiel 1b) beschrieben, durchgeführt. Die erzielten Ergebnisse sind aus der Tabelle zu entnehmen.

Vergleichsbeispiel

Man verfährt wie in Beispiel 1 beschrieben, verwendet jedoch Graphit mit folgenden Kennzahlen: Korngröße 50 bis 71 μm, scheinbare Dichte 1,65 g/ml, Druckfestigkeit des Ausgangsmaterials 20 N/mm², Porosität 20 %, Aschegehalt 0,12 %. Die Hydroxylaminsynthese wird, wie in Beispiel 1b) beschrieben, durchgeführt. Die Ergebnisse sind aus der Tabelle zu entnehmen.

Tabelle

| Beispiel | 1 | 2 | 3 | 4 | Vergl. |
|---|---|---|---|---|---|
| Anzahl der Zyklen | 14 | 9 | 9 | 25 | 2 |
| Selektivität $NH_2OH$ [%] 1) | 88,7 | 87,3 | 89,4 | 87,5 | 78,8 |
| Selektivität $NH_3$ [%] 1) | 8,8 | 9,0 | 7,1 | 8,3 | 14,0 |
| Selektivität $N_2O$ [%] 1) | 2,5 | 3,8 | 3,5 | 4,2 | 7,2 |
| NO-Umsatz [%] 1) | 97,2 | 95,8 | 96,9 | 95,4 | 91,8 |
| Raum-Zeit-Ausbeute* | 0,98 | 0,97 | 0,98 | 0,96 | 0,92 |
| Gesamtausbeute $NH_2OH$ [g] 2) | 193,7 | 120,2 | 124,4 | 333,3 | 23,1 |

* angegeben in $\dfrac{NO\text{-Umsatz [Mol]}}{1 H_2SO_4\ 4,3\ n \times h}$

1) = Durchschnittswerte

2) = über alle Zyklen errechnet

## Patentansprüche

1. Platin-Graphitträger-Katalysator mit einem Platingehalt von 0,01 bis 5 Gew.-%, dadurch gekennzeichnet, daß der Graphitträger eine scheinbare Dichte von 1,7 bis 2,2 g/ml aufweist.

2. Platin-Graphitträger-Katalysator nach Anspruch 1, dadurch gekennzeichnet, daß der Graphitträger eine Druckfestigkeit von 50 bis 250 N/mm² aufweist.

3. Platin-Graphitträger-Katalysator nach den Ansprüchen 1 und 2, dadurch gekennzeichnet, daß der Graphitträger eine Porosität von kleiner als 20 % aufweist.

4. Platin-Graphitträger-Katalysator nach den Ansprüchen 1 bis 3, dadurch gekennzeichnet, daß der Graphitträger eine Korngröße von 1 bis 600 µm aufweist.

**5.** Platin-Graphitträger-Katalysator nach den Ansprüchen 1 bis 4, dadurch gekennzeichnet, daß der Katalysator partiell mit Schwefel und/oder Selen vergiftet ist.

**6.** Verwendung von Platin-Graphitträger-Katalysatoren nach den Ansprüchen 1 bis 5 als Hydrierkatalysatoren.

**7.** Verwendung von Platin-Graphitträger-Katalysatoren nach den Ansprüchen 1 bis 5 für die Herstellung von Hydroxylammoniumsalzen durch katalytisches Hydrieren von Stickstoffmonoxid in wäßrigen Mineralsäuren.

## Claims

**1.** A platinum/graphite supported catalyst having a platinum content of from 0.01 to 5% by weight, wherein the graphite support has an apparent density of from 1.7 to 2.2 g/ml.

**2.** A platinum/graphite supported catalyst as claimed in claim 1, wherein the graphite support has a compressive strength of from 50 to 250 N/mm$^2$.

**3.** A platinum/graphite supported catalyst as claimed in claim 1 or 2, wherein the graphite support has a porosity of less than 20%.

**4.** A platinum/graphite supported catalyst as claimed in any of claims 1 to 3, wherein the graphite support has a particle size of from 1 to 600 $\mu$m.

**5.** A platinum/graphite supported catalyst as claimed in any of claims 1 to 4, wherein the catalyst has been partially poisoned by sulfur and/or selenium.

**6.** The use of a platinum/graphite supported catalyst as claimed in any of claims 1 to 5 as a hydrogenation catalyst.

**7.** The use of a platinum/graphite supported catalyst as claimed in any of claims 1 to 5 for the preparation of hydroxylammonium salts by catalytic hydrogenation of nitrogen monoxide in aqueous mineral acid.

## Revendications

**1.** Catalyseur à support de platine en graphite, d'une teneur en platine de 0,01 à 5% en poids, caractérisé en ce que le support en graphite présente une masse spécifique apparente de 1,7 à 2,2 g/ml.

**2.** Catalyseur à support de platine en graphite selon la revendication 1, caractérisé en ce que le support en graphite présente une résistance à la compression de 50 à 250 N/mm$^2$.

**3.** Catalyseur à support de platine en graphite selon les revendications 1 et 2, caractérisé en ce que le support en graphite possède une porosité inférieure à 20%.

**4.** Catalyseur à support de platine en graphite selon les revendications 1 à 3, caractérisé en ce que le support en platine présente un calibre des grains de 1 à 600 mym.

**5.** Catalyseur à support de platine en graphite selon les revendications 1 à 4, caractérisé en ce que le catalyseur est partiellement empoisonné avec du soufre et/du sélénium.

**6.** Utilisation de catalyseurs à support de platine en graphite selon les revendications 1 à 5 à titre de catalyseurs d'hydrogénation.

**7.** Utilisation de catalyseurs à support de platine en graphite selon les revendications 1 à 5 en vue de la fabrication de sels d'hydroxylammonium par l'hydrogénation catalytique du monoxyde d'azote dans des acides minéraux aqueux.